(19) Europäisches Patentamt
European Patent Office
Office européen des brevets

(11) **EP 1 251 331 B1**

(12) **EUROPÄISCHE PATENTSCHRIFT**

(45) Veröffentlichungstag und Bekanntmachung des Hinweises auf die Patenterteilung:
**07.03.2012 Patentblatt 2012/10**

(51) Int Cl.:
***G01C 15/00*** *(2006.01)*

(21) Anmeldenummer: **02008436.4**

(22) Anmeldetag: **13.04.2002**

(54) **Geodätisches Messgerät**

Geodetic measuring device

Dispositif géodésique

(84) Benannte Vertragsstaaten:
**CH DE LI SE**

(30) Priorität: **18.04.2001 CH 7062001**

(43) Veröffentlichungstag der Anmeldung:
**23.10.2002 Patentblatt 2002/43**

(73) Patentinhaber: **Leica Geosystems AG**
**9435 Heerbrugg (CH)**

(72) Erfinder:
• **Benz, Paul**
**9444 Diepoldsau (CH)**
• **Hinderling, Jürg**
**9437 Marbach (CH)**

(74) Vertreter: **Kaminski, Susanne et al**
**Kaminski Harmann Patentanwälte Est**
**Austrasse 79**
**9490 Vaduz (LI)**

(56) Entgegenhaltungen:
• **HUGGETT G R: "TWO-COLOR TERRAMETER" TECTONOPHYSICS,ELSEVIER, AMSTERDAM, NL, Bd. 71, Nr. 1-04, 1981, Seiten 29-39, XP001012596 ISSN: 0040-1951**
• **GORT A F: "A fully integrated, microprocessor-controlled total station" HEWLETT-PACKARD JOURNAL,HEWLETT-PACKARD CO. PALO ALTO,US, Bd. 31, Nr. 9, September 1980 (1980-09), Seiten 3-11, XP002155352**

**Beschreibung**

Die Erfindung betrifft ein geodätisches Messgerät mit einer Vorrichtung zur Ermittlung des dispersiven Einflusses auf eine Messung entlang einer Strecke nach dem Prinzip der Phasen- oder Impulsmodulation nach dem Oberbegriff des Anspruchs 1, sowie eine Verwendung der Vorrichtung zur Korrektur der aus der Dispersion resultierenden Einflüsse auf Distanzmessungen nach Anspruch 12.

Bei fast allen Vorrichtungen zur elektronischen Distanzmessung (EDM-Vorrichtungen) wird der Einfluss der atmosphärischen Parameter nach Abschluss der eigentlichen Entfernungsmessung im Rahmen eines weiteren rechnerischen Schritts als Distanzkorrektur angefügt. Die massgeblichen atmosphärischen Parameter werden dabei jeweils nicht mit dem Distanzmesser sondern anderen, separaten Instrumenten wie Thermometer, Barometer und Hygrometer gemessen.

Die Ausbreitungsgeschwindigkeit eines bei der elektrooptischen Entfernungsmessung emittierten optischen Impulses oder eines in beliebiger Weise modulierten Signalzuges, wird durch den Gruppenbrechungsindex n festgelegt. Brechungs- und Gruppenbrechungsindex sind dabei keine konstanten Grössen, sondern hängen vorwiegend von Wellenlänge, Temperatur, Luftdruck, Gasgemisch und vom Feuchtegehalt der jeweilig vorherrschenden Atmosphäre ab.

Eine unmittelbar gemessene und am elektronischen Distanzmesser (EDM) angezeigte Streckenlänge $D_0$ (Rohmessung) bezieht sich auf einen bestimmten Gruppenbrechungsindex $n_0$. Anhand der zusätzlich gemessenen meteorologischen Parameter Temperatur T, Luftdruck p und relativer Luftfeuchtigkeit RH kann der wahre Gruppenbrechungsindex $n=n(T,p,RH,....)$ berechnet werden. Mittels einer sogenannten atmosphärischen Korrektur

$$(1) \quad \Delta D = D_0 \cdot \left( \frac{n_0 - n}{n} \right)$$

lässt sich die wahre Distanz D ermitteln:

$$(2) \quad D = D_0 + \Delta D$$

Mit dieser atmosphärischen "Post-Processing" Methode werden in der Regel Distanzmessgenauigkeiten gegen *1 ppm* erreicht, sind hingegen Temperatur T und Luftdruck p nicht bekannt oder über die gesamte optische Weglänge nicht repräsentativ, so kann die gemessene Rohdistanz $D_0$ leicht *30 ppm* oder mehr vom wahren Wert abweichen.

Bei längeren Strecken, die zudem noch meist über ungleichmässige Topographie führen, wird eine zuverlässige Bestimmung des wirksamen Gruppenbrechungsindexes aus meteorologischen Daten an den Streckenendpunkten problematisch. Versuche, diese Daten längs der Strecke zu bestimmen, waren bisher nicht erfolgreich.

In der Geodäsie besteht der Wunsch nach einem kostengünstigen Distanzmessgerät, bei dem der Einfluss des atmosphärischen Brechungsindex automatisch und rasch korrigiert werden kann. Dieser beeinflusst bei der elektro-optischen Entfernungsmessung im Distanzbereich zwischen *100 m* bis mehreren *km* die Messung massgeblich. Dies gilt sowohl für elektro-optische Entfernungsmesser, die auf dem Phasen- als auch auf dem Laufzeitmessprinzip basieren. Mit einer automatischen Korrektur des Einflusses der atmosphärischen Brechung könnte der Aufwand an Zeit und Gerätschaften für Präzisionsmessungen bei langen Distanzen beträchtlich verringert werden.

Einer der Grundgedanken besteht in der Ausnutzung der spektral breitbandigen Dispersion, indem die Strecke mit Licht oder elektromagnetischer Strahlung zweier unterschiedlicher Wellenlängen ausgemessen wird. Diese Zwei- oder Mehrfarbenmessmethode ist seit ca. 1975 bekannt. Bei gleichzeitiger Distanzmessung mit mindestens 2 verschiedenen, elektromagnetischen Wellenlängen, optisch oder auch im Mikrowellenbereich, kann mittels des bekannten, spektral breitbandigen dispersiven Verhaltens der Atmosphäre der oder die wichtigsten atmosphärischen Störparameter bestimmt werden, um schliesslich die Distanzmessung vom Einfluss des in der Regel nicht genau bekannten Gruppenbrechungsindex weitgehend zu korrigieren.

Entsprechende Theorien basieren auf den spektral breitbandigen Formeln von Edlen und Barrel & Sears. (Ref. Rainer Joeckel, Manfred Stober: Elektronische Entfernungs- und Richtungsmessung, Verlag Konrad Wittwer).

Die Streckenmessergebnisse für die 2 Trägerwellenlängen sind $D_r$ und $D_b$, die entsprechenden Brechungsindices $n_r$ und $n_b$. Die wahre Distanz ergibt sich nach folgender Formel für die Distanzkorrektur:

$$(3) \quad D = D_r - (D_b - D_r) \cdot \left( \frac{n_r - 1}{n_b - n_r} \right)$$

Die eigentliche Problematik dieser, auf dem Modell der spektral breitbandigen Formel basierenden, Zwei-Farbenmethode besteht in der Auflösegenauigkeit, mit welcher die Streckendifferenz $(D_b - D_r)$ ermittelt werden muss.

Je weiter die beiden Trägerwellenlängen auseinander liegen, desto kleiner und günstiger wird damit der Modellparameter

$$(4) \quad Q = \left( \frac{n_r - 1}{(n_b - n_r)} \right)$$

Liegen die beiden Trägerwellenlängen nicht genügend weit auseinander so ist der Modellparameter sehr gross und damit auch der Fehler der Distanzkorrektur.

Es ist bekannt, dass die gegenwärtige Genauigkeitsgrenze für Messungen optischer Signale bei *1%* liegt, wobei der Haupteinflussfaktor auf Abweichungen der Signalmessung die atmosphärische Turbulenz ist. Da sich die Auflösegenauigkeit unabhängig von der Distanzlänge auswirkt, sind diese Art von Zweifarbeninstrumente bei längeren Strecken mit einer deutlich oberhalb von *2 km* liegenden Distanz der Einfarbenmessung potentiell überlegen.

Bekannte Zwei-Farbeninstrumente sind beispielsweise Goran I vom National Physical Laboratory (Teddington/UK) mit $\lambda_b$ *= 458nm* und $\lambda_g$ *= 514nm,* und dem grossen *Q* **= 57**. Für einen Distanzfehler von *1mm* beträgt die erforderliche Auflösegenauigkeit dabei *0,02mm.* Da letztere nicht oder nur sehr umständlich realisierbar ist, konnte sich diese Methode bis heute nicht durchsetzen. Bis heute sind keine kommerziellen Vorrichtungen im Einsatz, zudem sind die bisher gebauten Anlagen sehr kostspielig und nehmen die Fläche eines Labortisches ein.

Aus der Patentschrift US 5,233,176 ist eine Vorrichtung mit Zwei-Farben-Methode bekannt, die atmosphärische Einflüsse auf Messungen durch die Auswertung der Ablage zweier Laserstrahlen unterschiedlicher Wellenlängen von einem jeweiligen Referenzstrahlengang kompensiert. Hierbei wird Laserlicht mit zwei unterschiedliche Trägerwellenlängen in kurzen Pulsen emittiert. Aus der dispersiven Verschiebung der beiden Strahlgänge von der geraden Linie wird auf den dispersiven Einfluss geschlossen und die Messung korrigiert.

Ein erheblicher Nachteil der bekannten Vorrichtungen mit 2 oder 3 Trägerwellenlängen ist die Ausnutzung der nur schwachveränderlichen breitbandigen optischen Dispersion, die aus den nah beieinander liegender Trägerwellenlängen resultiert. Es wird dabei nach den breitbandigen Modellen von Barrel & Sears oder nach den Formeln nach Edlen verfahren. Der Hauptnachteil ist der schwache Messeffekt, der lediglich eine ungenaue Distanzkorrektur ermöglicht, welche unter der Qualität der klassischen atmosphärischen Korrektion anhand der Bestimmung der meteorologischen Parameter T,p und RH liegt. Nach den Modellen von Barrel/Sears oder nach den Formeln von Edlen ist der Gruppenbrechungsunterschied der Atmosphäre im Bereich von Rot (z.B. *635nm*) bis ins nahe Infrarot (z.B. *820nm*) nur sehr gering (etwa *5ppm*).

Somit können als wesentliche Nachteile aller bisherigen Vorrichtungen mit zwei oder drei Trägerwellenlängen zusammengefasst werden:

1) Eine Verwendung von Trägerwellenlängen mit geringem Abstand führt nur zu einem sehr kleinen Unterschied in der optischen Dispersion.

2) Hieraus folgt das Erfordernis einer extrem hohen Auflösegenauigkeit, das nach dem Stand der Technik nicht feldtauglich realisiert ist.

3) Die alternative Verwendung von Trägerwellenlängen mit grossem Abstand bedingt nach dem Stand der Technik einen hohen apparativen Aufwand, da für beide Wellenlängenbereiche unterschiedliche Anforderungen, z.B. hinsichtlich der Schaltungen bzw. Ansteuerungen, bestehen.

4) Die bei grossem Abstand der Trägerwellenlängen zu realisierenden Geräte erfüllen nicht die Anforderungen, die eine vermessungstechnische Verwendung stellt, insbesondere hinsichtlich Gewicht und Robustheit.

Eine technische Aufgabe der vorliegenden Erfindung besteht in der Bereitstellung einer feldtauglichen geodätischen Vorrichtung zur Messung der Dispersion entlang einer Sichtstrecke mit einer Mehrfarbenmethode, die für einen vorgegebenen Distanzfehler eine geringere Auflösegenauigkeit erfordert oder aber für eine erzielbare Auflösegenauigkeit einen geringeren Distanzfehler bewirkt als Vorrichtungen des Standes der Technik.

Eine weitere Aufgabe besteht darin, eine auf dem Phasenmessprinzip beruhende Vorrichtung mit hinsichtlich des dispersiven Einflusses korrigierten Distanzmessungen bereitzustellen.

Eine weitere Aufgabe besteht in der Vereinfachung der technischen Voraussetzungen zur Emission elektromagnetischer Strahlung für Mehrfarbenmessungen mit grösserer Wellenlängendifferenz.

Eine weitere Aufgabe ist die Bereitstellung einer Vorrichtung für Mehrfarbenmessungen mit grosser Wellenlängendifferenz, die eine gemeinsame Optik mit einem visuellen Fernrohr ermöglicht.

Diese Aufgaben werden erfindungsgemäss durch die kennzeichnenden Merkmale des Anspruchs 1 bzw. der abhängigen Ansprüche gelöst. Eine Verwendung der Vorrichtung ergibt sich aus dem Anspruch 12. Vorteilhafte und alternative Ausgestaltungen und Weiterbildungen ergeben sich aus den Merkmalen der abhängigen Ansprüche.

Die der Erfindung zugrundeliegende Idee ist eine Ergänzung der Messung im infraroten oder roten Bereich (*850nm* oder *780nm*) mit einer Messung im blau-violetten oder violetten Bereich (*440nm* oder *405nm*). Das Licht im blauvioletten oder violetten Bereich erfährt einen starken atmosphärischen Refraktionseinfluss, so dass eine verbesserte atmosphärische Korrektur möglich wird. Der atmosphärische Gruppenbrechungsindexunterschied liegt beispielsweise für den violetten Bereich bei ~*25ppm,* der Faktor *Q* beträgt ca. *10,* so dass die Anforderungen an die Genauigkeit der Einzelfarbenmessung wesentlich kleiner als bei Verfahren des Stands der Technik sind.

Die zur Realisierung einer kompakten und für den praktischen geodätischen Einsatz verwendbaren Lösung erforderliche apparative Grundvoraussetzung ist mit stromsparenden und kostengünstigen Halbleiterlasern als Strahlungsquellen im blau-violetten und violetten Spektralbereich gegeben. Laser, die in diesem Spektralbereich emittieren bzw. das ihnen zugrundeliegende Halbleitermaterial sind beispielsweise aus den Patentschriften US 5,306,662, US 5,578,839, US 5,747,832 und US 5,767,581 bekannt.

Blauviolette oder violette Laserdioden sind in ihrer Genauigkeit blauen Laserdioden überlegen. Eine mögliche Verwendung von UV-Laserdioden (*<400nm*) ist nicht mehr vorteilhaft, da deren Strahlung durch die zunehmende atmosphärische Streuung stark geschwächt wird. Der Streukoeffizient der Luft nimmt aufgrund der Rayleigh-Streuung mit kürzer werdender Wellenlänge mit der vierten Potenz zu.

Für den Bereich am langwelligen Ende des sichtbaren Spektrums sind kommerziell erhältliche Laserdioden sowie auch empfindliche Halbleiter-Detektoren verfügbar, so dass kostengünstige Lösungen realisierbar sind.

Ein Distanzmessgerät kann beispielsweise mit einem infraroten Halbleiterlaser mit einer Wellenlänge von $\lambda_{IR}$=850nm sowie einem violetten Halbleiterlaser mit einer Wellenlänge von $\lambda_V$=405 nm bestückt werden, wobei die Indices IR für Infrarot und V für Violett stehen. Die erforderliche Streckenmessung kann mit beiden Lasern gleichzeitig oder nacheinander erfolgen.

Der Unterschied zwischen den beiden Distanzmessresultaten ist ca. *25ppm,* d.h. bei einer Distanz von *1km* misst der violette Laser ca. *25mm* weiter als der infrarote Laser. Jedoch variiert der Distanzunterschied $D_V$-$D_{IR}$ je nach aktuellem Gruppenbrechungsindex der Luft (in Abhängigkeit von Temperatur, Luftdruck, Feuchte, $CO_2$-Gehalt etc.).

Die tatsächliche Distanz errechnet sich unter Berücksichtigung von (3) gemäss

$$(5) \quad D = D_{IR} - \left( D_V - D_{IR} \right) \cdot \left( \frac{n_{IR} - 1}{n_V - n_{IR}} \right)$$

Mit den Wellenlängen von $\lambda_V$=405nm und $\lambda_{IR}$=850nm ergibt sich

$$(6) \quad D = D_{IR} - \left( D_V - D_{IR} \right) \cdot \left( \frac{1.002945 - 1}{1.000320 - 1.0002945} \right) = D_{IR} - \left( D_V - D_{IR} \right) \cdot 11.54902$$

Zur Korrektur wird also die Distanzdifferenz mit dem Faktor *11.549* multipliziert, d.h. die Einzeldistanzen müssen um den Faktor $11.549 \cdot \sqrt{2}$ genauer bestimmt werden, als die angestrebte Genauigkeit des Endresultates sein soll. Beispielsweise müssen bei einer angestrebten Absolutgenauigkeit von 3mm die Einfarbendistanzen relativ zueinander auf ~*0.2mm* genau bestimmt werden.

Ein bekanntes, sehr genaues Messverfahren, welches auf dem sogenannten Messprinzip von Fizeau basiert, ist das Mekometerprinzip (J.M. Rüeger: Electronic Distance Measurement, 4. Auflage, Springer-Verlag, 1996), dort wird der auszusendende Laserstrahl mit einem elektrooptischen Modulator (Kerrzelle) im MHz- bis GHz-Bereich moduliert und der Empfangsstrahl mit demselben Modulator phasenkohärent demoduliert. Diese Methode der externen Modulation erzeugt insbesondere wegen den hohen Frequenzen eine äusserst hohe Distanzmessgenauigkeit, ist jedoch für feldtaugliche, ergonomische und kleinvolumige Vermessungsinstrumente eher ungeeignet.

Die Aufgabe, Distanzmessungen mittels Laserdioden auf *<0.2mm* genau zu messen, erfordert eine andere technische Lösung. Der Weg über eine direkte Strommodulation mit hoher Frequenz ist bei Laserdioden hinsichtlich der erreichbaren Messgenauigkeit nicht zielführend.

Werden hingegen Laserdioden direkt mittels elektronischer Ansteuerung intensitätsmoduliert, sodass die optischen Anstiegs- und Abfallszeiten möglichst vergleichbar oder kürzer als *1* Nanosekunde sind, so werden Genauigkeiten im erforderlichen Sub-*mm*-Bereich erreicht.

Die Genauigkeit der einzelnen Distanzmessung ist dabei von der Wellenfront des Signals bzw. Phasenschwankung bei der Emission abhängig. Die Intensitätsmodulierung der Trägerwellenlänge oder die Anregung von Laserdioden zur Emission von Pulsen, deren Pulsbreite kleiner als 2 Nanosekunden ist, bietet den Vorteil geringer Phasenschwankungen, da die Strahlungsmoden der Laserdiode gezwungen werden, phasengleich zu strahlen, ebenso sind störende Einflüsse von kohärenten Strahlungseigenschaften unterdrückt. Eine Vorrichtung mit dieser Eigenschaft ist aus den Patentschriften EP-0 701 702 und EP-0 738 899 bekannt.

Die Verwendung von Trägerwellenlängen im blauvioletten oder violetten Bereich erfordert Pulsbreiten bzw. Anstiegszeiten vorzugsweise im Picosekundenbereich, da die Energiedifferenz zwischen den Niveaus des Lasers grösser ist als bei längerwelligen Lasern und die Lebensdauer der Zustände in einem Laserniveau u.a. mit der Energiedifferenz der Niveaus und der beim Übergang zu emittierenden Strahlung negativ korreliert ist. Bei derartig kurzen Pulsen kann eine höhere Leistung und eine homogene Emission erreicht werden.

Eine ausschliessliche Verwendung von sichtbaren Wellenlängen (ca. *700nm bis 400nm*) bzw. Wellenlängen im Randbereich des sichtbaren Spektrums ist aus lasersicherheitstechnischen Gründen vorteilhaft, da sie in die Laserklasse 2 fallen, so dass höhere Leistungspegel zulässig sind. Darüber hinaus bietet ein sichtbarer Lichtfleck des Lasers auf dem zu vermessenden Objekt die Möglichkeit einer einfachen Positionierung des Lichtflecks.

Liegen die Wellenlänge am Rand und nicht in der Mitte des sichtbaren Wellenlängenbereichs, kann eine gemeinsame Optik zusammen mit einem visuellen Fernrohr verwendet werden und das Fernrohr des Theodolits wird nicht farbstichig, demgegenüber würde z.B. bei Nutzung eines grünen Lasers das Bild des visuellen Fernrohrs für das Auge farbstichig.

Eine gemeinsame Optik hat den weiteren Vorteil, Volumen zu sparen, insbesondere bei radiometrisch-optischen Systemen mit möglichst grosser Empfängeröffnung. Zudem durchlaufen beide koaxial angeordneten Trägerwellen vollständig dasselbe Luftvolumen, sodass der Distanzunterschied ausschliesslich auf Dispersion beruht, andere Störgrössen können nicht auftreten.

Ein empfangsseitiger Vorteil entsteht bei Verwendung einer gemeinsamen Optik und bei Benutzung des gleichen Empfängers (Photodiode, HF-Verstärker, Demodulator), sodass sich mögliche Driften gegenseitig aufheben. In den bisherigen Vorrichtungen, die wegen der unterschiedlichen Lasersysteme mit unterschiedlichen Modulationsverfahren arbeiten, sind separate Empfangssysteme notwendig. Ausserdem müssen bei diesen Vorrichtungen wegen des geringen Wellenlängenunterschiedes die Einzeldistanzen wesentlich genauer ermittelt werden, woraus entweder eine lange Messzeit oder eine Einbusse an Reichweite reasultieren kann.

Die erfindungsgemässe Verwendung von vergleichsweise weit auseinanderliegenden Wellenlängen hat nicht nur den Vorteil, dass das hierbei stärker dispersive Verhalten der Atmosphäre besser zur Bestimmung des Brechungsindexes benutzt werden kann, sondern auch, dass der visuelle Fernrohrkanal nicht beeinträchtigt wird.

Die Verwendung eines gemeinsamen Objektivs sowohl für das visuelle Fernrohr als auch für die beiden Trägerwellenlängen am Randbereich des visuellen Spektrums ist mit besonderen optischen Anforderungen verbunden. Einerseits muss die optische Abbildungsqualität, insbesondere die Bildschärfe, gewährleistet sein, anderseits müssen, falls die beiden Trägerwellen auf dieselbe Empfangsdiode abgebildet werden, die Bildweiten für beide Wellenlängen identisch sein. Diese schwierige Aufgabe kann mit einem lediglich aus 3 Linsen bestehenden Objektiv gelöst werden, bei dem die Glassorten für die Linsen optimiert ausgewählt werden.

Um die Bildweiten bei beispielsweise *400nm* und *780nm* gleich gross zu dimensionieren, wird der bezüglich der Wellenlänge parabolartige Verlauf der chromatischen Fokusverschiebung mittels geeigneter Glassorten spektral an die richtige Position verschoben. Die Bildweiten für die beiden Trägerwellenlängen sind nun identisch, ohne dass die Bildqualität im visuellen Spektralbereich verringert wird.

Die Verwendung einer Optik mit reflektiven Elementen bietet aufgrund deren achromatischen Verhaltens die Möglichkeit, Strahlen mehrerer Wellenlängen mit derselben Optik zu empfangen und abzubilden, allerdings ist ein System aus spiegelnden Elementen im allgemeinen teuer und stellt höhere Anforderungen an die Oberflächenqualität der optisch wirksamen Flächen.

Die Verwendung von zwei Halbleiterlasern als Strahlungsquellen erlaubt eine kleine Baugrösse der Vorrichtung zur Dispersionskorrektur, die somit auch ohne Schwierigkeiten in einen Theodoliten integriert werden kann und dort zur automatischen Eliminierung von dispersiven Fehlern bei der Distanzmessung verwendet werden kann. Für den Einsatz in einem Theodoliten ist der niedrige Stromverbrauch der Halbleiterlaser vorteilhaft, da die Stromversorgung im Normalfall über Batterien erfolgt. Die Verwendung der erfindungsgemässen Vorrichtung in einem Theodoliten wird hier nur als ein Beispiel für ein geodätisches Messgerät beschrieben. Grundsätzlich kann die Vorrichtung in jedem geeigneten geodätischen Messgerät zum Einsatz kommen.

In baulicher Hinsicht ergeben sich für die erfindungsgemässe Vorrichtung weitere Vorteile. In der erfindungsgemässen Vorrichtung wird für die zweite Lichtquelle ebenfalls eine Laserdiode oder LED eingesetzt, deren Ansteuerungsverhalten dem der ersten Lichtquelle des Distanzmessers entspricht. Dadurch werden technisch einfache Realisierungen der Zwei-Farbenmethode möglich, da insbesondere der Sendestrahlengang und die elektronische Ansteuerung lediglich zu duplizieren sind. Durch einen gemeinsamen Sendestrahlengang wird erreicht, dass von beiden koaxialen Wellenlängen ein annähernd gleiches atmosphärisches Volumen vermessen wird.

Durch die Verwendung eines infraroten und eines violetten Halbleiterlasers kann für beide Laser dieselbe Modulationsart (Amplitudenmodulation) verwendet werden. Dies vereinfacht sowohl die Lichtleistungsregelung als auch die elektronische Ansteuerschaltung, weil mit direkter Strommodulation gearbeitet werden kann. Durch diese direkte Modulation kann auf einen externen Modulator verzichtet werden, der sowohl in preislicher Hinsicht, als auch in Bezug auf die Komplexität und den Platzbedarf Nachteile aufweist.

Die erfindungsgemäss verwendbaren Halbleiterlaser sind in den Abmessungen um Grössenordnungen kleiner als die in den bisher existierenden Zweifarben-Distanzmessvorrichtungen verwendeten Gas- oder Festkörperlaser, die meistens mit einem externen Polarisationsmodulator arbeiten. Der Energieoder Leistungsverbrauch ist um Faktor 10 bis Faktor 100 geringer und eine teure und komplizierte Modulatoransteuerung entfällt. Des weiteren ist bei der direkten Emission von Laserlicht mit unterschiedlichen Trägerwellenlängen keine Frequenzverdoppelung oder Verdreifachung des Laserlichtes mit einem nichtlinearen Kristall notwendig.

Aufgrund der im kurzwelligen Bereich grösseren Abhängigkeit des Brechungsindex von der Wellenlänge, ist es vorteilhaft, die blauviolette oder violette Strahlungsquelle hinsichtlich ihrer Wellenlänge zu stabilisieren. Dies kann durch allgemein bekannte Verfahren, z.B. Distributed-Feedback, Distributed-Bragg-Reflector, Fibre-Bragg-Grating oder Fabry-Perot-Etalon-Locking, erreicht werden.

Eine Möglichkeit zur Berücksichtigung der temperaturabhängigen Drift des Lasers besteht in deren Modellierung und nachfolgender rechnerischer Berücksichtigung oder deren direkter Vermeidung durch Kühlung bzw. Heizung des Lasers. Die Möglichkeit der rechnerischen Berücksichtigung der Drift beruht auf der im blauvioletten oder violetten Wellenlängenbereich eindeutigen Abhängigkeit der Wellenlänge von der Temperatur des Lasers. Violette Laserdioden besitzen z.B. eine im Vergleich zu den längerwelligen Laserdioden deutlich kleinere thermische Wellenlängendrift von typischen *0.05 nm/C°,* so dass das Erfordernis einer Kompensation bzw. Berücksichtigung geringer ausfällt als bei anderen Lasertypen. Die Wellenlänge lässt sich mittels eines direkt an der Laserdiode platzierten Temperaturfühlers auf *0.05 nm* genau bestimmen und der Einfluss auf den dispersiven Effekt mit der geforderten Genauigkeit rechnerisch eliminieren.

Die Drift kann aber auch alternativ oder ergänzend durch Kühlung oder Heizung des Lasers, z.B. mit einem Peltierelement, direkt vermieden oder verringert werden.

Die erfindungsgemässe Vorrichtung erlaubt es aufgrund der dargestellten Vorteile in Hinblick auf die verwendbare Optik und Elektronik, die erzielbaren mechanischen Abmessungen sowie den Energie- oder Stromverbrauch, Zweifarbendistanzmessung im einem geodätischen Messinstrument, wie z.B. einem Tachymaten, zu integrieren.

Die erfindungsgemässe Vorrichtung und ein erfindungsgemässer Messgerät am Beispiel eines Theodoliten werden nachfolgend anhand von in der Zeichnung schematisch dargestellten Ausführungsbeispielen rein beispielhaft näher beschrieben. Im einzelnen zeigen

Fig.1    die physikalischen Verhältnisse einer Zwei-Farben-Methode für eine Vorrichtung des Standes der Technik;

Fig.2    die physikalischen Verhältnisse einer Zwei-Farben-Methode für eine erfindungsgemässen Vorrichtung;

Fig.3    die schematische Darstellung des Vorteils einer Stabilisierung der kürzerwelligen Strahlungsquelle;

Fig.4    eine schematische Darstellung der Verwendung einer erfindungsgemässen Vorrichtung in einem Theodolitfernrohr;

Fig.5    die chromatische Fokusverschiebung einer Optik für eine erfindungsgemässe Vorrichtung und

Fig.6    den Wellenfrontfehler einer Optik für eine erfindungsgemässe Vorrichtung.

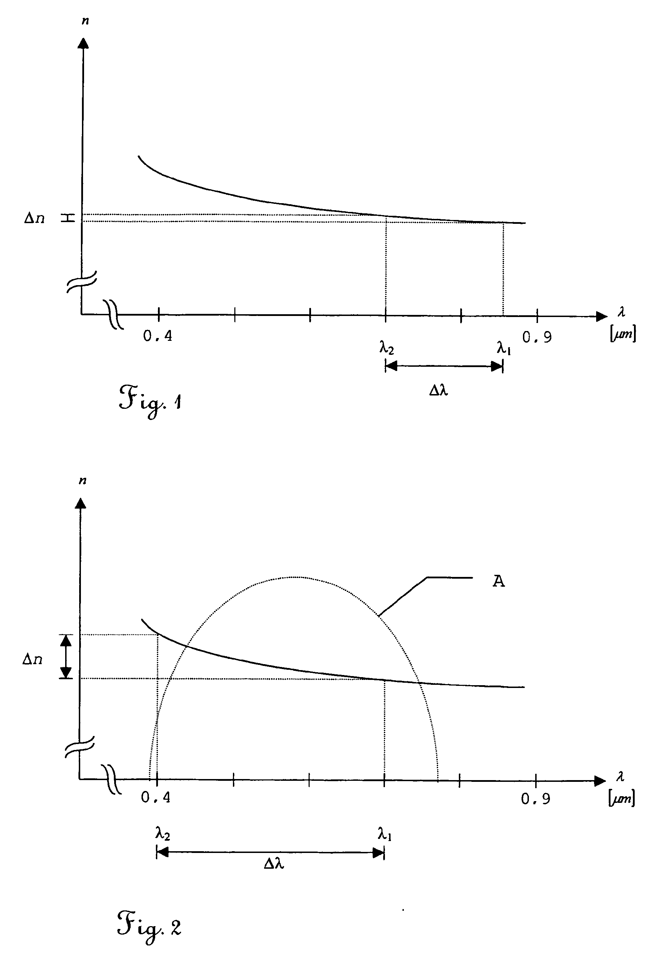

Fig.1 zeigt eine Nutzung der Dispersion für eine 2-Farben-Methode des Standes der Technik durch Verwendung von zwei Trägerwellenlängen $\lambda_1$ und $\lambda_2$, die ein atmosphärisches Volumen im roten Spektralbereich bei *700 nm* und im infraroten Spektralbereich bei *850 nm* sondieren. Auf der horizontalen Achse ist die Wellenlänge $\lambda$, auf der vertikalen

Achse der Brechungsindex *n* aufgetragen. Da die Präzision der Dispersionskorrektur eine möglichst grosse Differenz der vermessenen Brechungsindices verlangt, müssen aufgrund der Abhängigkeit des Brechungsindex von der Wellenlänge zwei Trägerwellenlängen gewählt werden, die weit auseinanderliegen, d.h. die Differenz $\Delta\lambda$ der Trägerwellenlängen $\lambda_1$ und $\lambda_2$ wird maximiert. Nach dem Stand der Technik erfolgt dies, indem eine Wellenlänge in den infraroten Bereich verschoben wird.

In Fig.2 werden die physikalischen Verhältnisse einer Zwei-Farben-Methode für eine erfindungsgemässe Vorrichtung gezeigt. Auf der horizontalen Achse ist wiederum die Wellenlänge $\lambda$, auf der vertikalen Achse der Brechungsindex *n* aufgetragen. Die verwendeten Wellenlängen $\lambda_1$ und $\lambda_2$ liegen nun im violetten Bereich bei *405 nm* und im roten Bereich bei *700 nm.* Damit können bei einer vergrösserten Wellenlängendifferenz beide Wellenlängen zusätzlich im sichtbaren Bereich liegen. Darüber hinaus wird die Differenz $\Delta n$ des Brechungsindex noch durch den steilen Anstieg des Brechungsindex am kurzwelligen Ende des Spektrums verstärkt. Die Kurve A stellt schematisch den Verlauf der Helleempfindlichkeit des menschlichen Auges dar.

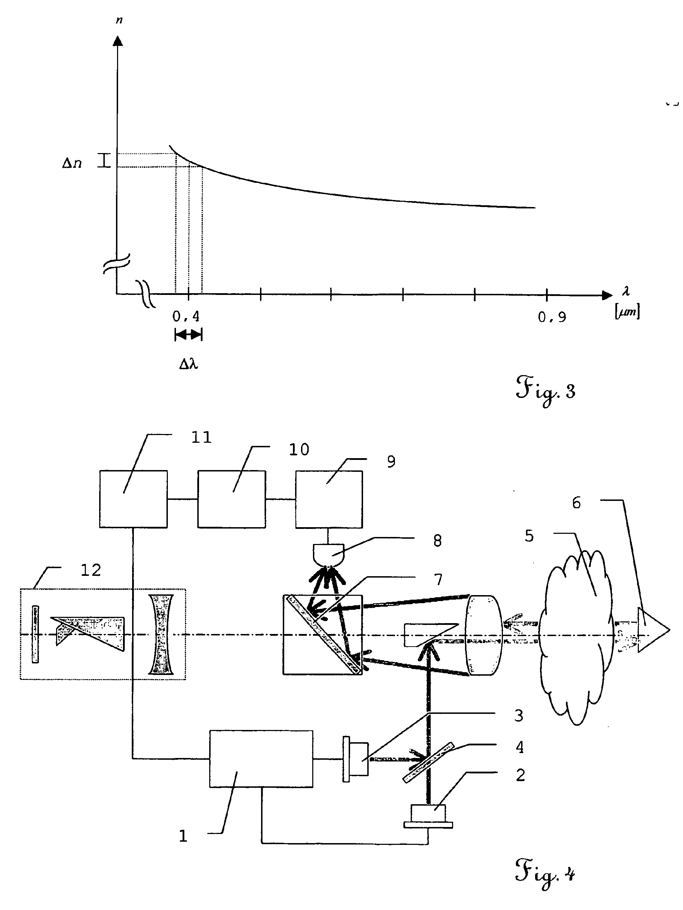

Fig.3 stellt die physikalischen Gegebenheiten dar, die eine Stabilisierung der kurzwelligen Strahlung vorteilhaft machen. Auf der horizontalen Achse ist wiederum die Wellenlänge $\lambda$, auf der vertikalen Achse der Brechungsindex *n* aufgetragen. Die mit einer Wellenlänge von *405 nm* emittierte Strahlung kann aufgrund verschiedener Effekte, z.B. durch thermische Einflüsse, in einem Bereich von $\Delta\lambda$ um den nominalen Wert schwanken oder von diesem hinweg driften. Eine daraus resultierende Variation $\Delta n$ des Brechungsindex erreicht Werte, die aufgrund des im kurzwelligen Bereich steilen Verlaufs des Brechungsindex die Grössenordnung der Gesamtdifferenz eines Verfahrens nach dem Stand der Technik erreichen und damit die Genauigkeit der Vorrichtung negativ beeinflusst. Eine Stabilisierung der kurzwelligen Strahlung wird damit unter Umständen eine notwendige Voraussetzung darstellen.

In Fig.4 wird eine beispielhafte Realisierung der erfindungsgemässen Vorrichtung in einem Theodolitfernrohr schematisch gezeigt. Von einer Sendeeinheit 1 werden eine kurzwellige Strahlungsquelle 2 und eine langwellige Strahlungsquelle 3 angesteuert, die somit elektromagnetische Strahlung zweier unterschiedlicher Trägerwellenlängen emittieren. Über einen Strahlteiler 4 werden beide Trägerwellenlängen zusammengeführt und durch das zu sondierende atmosphärische Volumen 5 auf einen Reflektor 6 geleitet. Nach erfolgter Reflexion wird die Strahlung über einen Teilerwürfel 7 auf einem Empfänger 8 geführt, dort aufgenommen und in einer Empfangseinheit 9 elektronisch verarbeitet. In einer nachgeschalteten Distanzmesseinheit 10 wird die zu messende Distanz berechnet und in einer Recheneinheit 11 hinsichtlich des dispersiven Einflusses korrigiert. Optional kann ein visuelles Fernrohr 12 zur Ausrichtung des Theodoliten Verwendung finden.

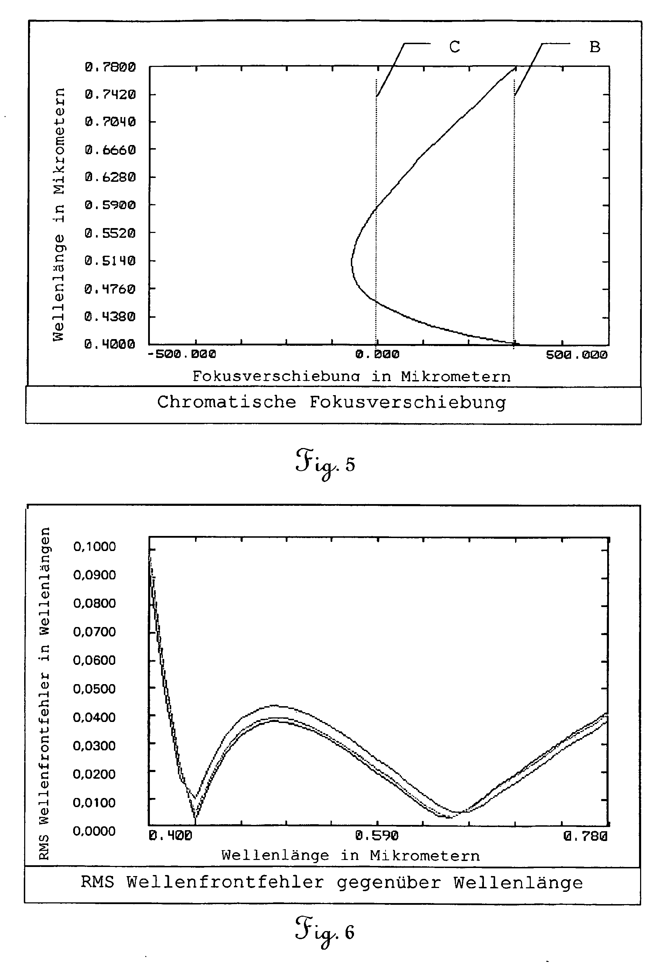

In Fig.5 wird der Verlauf der chromatischen Fokusverschiebung für eine gemeinsame Optik aus drei Linsen dargestellt, die über die Wahl der Glassorten hinsichtlich der beiden verwendeten Wellenlängen spektral optimiert wurden. Auf der vertikalen Achse ist die Wellenlänge der elektromagnetischen Strahlung in Mikrometer und auf der horizontalen Achse die Verschiebung des Fokus in Mikrometer angegeben. Die Linie B zeigt die Situation für zwei Halbleiterlaser, deren Wellenlängen im violetten Bereich bei *400nm* und im roten Bereich bei *780nm* liegen. Für diese Wellenlängen tritt eine identische Fokusverschiebung auf, so dass die gemeinsame abbildende Optik verwendet werden kann. Würde im Vergleich hierzu statt des einen violetten oder roten Halbleiterlasers ein blauvioletter oder grüner Laser verwendet, wie durch die Linie C gekennzeichnet, ergäben sich unterschiedliche Fokusverschiebungen für die beiden Wellenlängen und es müsste eine andere, auf diese Wellenlängenkombination optimierte Optik verwendet werden. Aufgrund der ähnlichen Verschiebung der roten und violetten Wellenlängen, die durch den typischen Verlauf der Kurve der Fokusverschiebung bedingt ist, ist es leichter möglich, für diese beiden Wellenlängen gemeinsame Optiken herzustellen.

Die mit einer entsprechenden Optik zu erzielende optische Qualität, d.h. Bildqualität, wird in Fig.6 gezeigt. Aufgetragen ist der Verlauf des RMS-(Root-Mean-Square)-Wellenfrontfehlers gegenüber der Wellenlänge der elektromagnetischen Strahlung für die drei Linsen. Auf der horizontalen Achse ist die Wellenlänge in Mikrometern und auf der vertikalen Achse der Wellenfrontfehler in Einheiten der Wellenlänge angegeben. Der RMS-Wellenfrontfehler ist ein Mass für die Güte der jeweiligen Linse.

Die in Fig.1 - Fig.3 dargestellten Verläufe des Brechungsindex und der Helleempfindlichkeit des menschlichen Auges sind rein qualitativ zu verstehen. Dargestellte Differenzen, wie $\Delta n$ und $\Delta\lambda$, erläutern auftretende Effekte qualitativ und können nicht als Grundlage von quantitativ exakten Betrachtungen dienen.

Es versteht sich, dass die dargestellten Figuren eine von vielen Ausführungsformen darstellen und der Fachmann alternative Realisierungsformen, z.B. unter Verwendung anderer Mittel zur Emission und zum Empfang elektromagnetischer Strahlung oder zur Signalaufnahme oder Signalverarbeitung, ableiten kann.

**Patentansprüche**

**1.** Geodätisches Messgerät, insbesondere Theodolit, mit

- einem visuellen Fernrohr und

- einer Vorrichtung zur Ermittlung des dispersiven Einflusses auf eine Messung, insbesondere Distanzmessung, entlang einer Strecke nach dem Prinzip der Phasen- oder Impulsmodulation,

- mit Mitteln zur Emission (1,2,3,4) von elektromagnetischer Strahlung mit wenigstens 2 Trägerwellenlängen, wobei die Mittel zur Emission (1,2,3,4) so gestaltet sind, dass sie wenigstens in Form mindestens eines ersten Halbleiterlasers (2) eine erste Trägerwellenlänge im infraroten oder roten Wellenlängenbereich emittieren,

- mit Mitteln zum Empfang (7,8,9) der wenigstens 2 Trägerwellenlängen,

- mit Mitteln zur Laufzeitmessung (10) der wenigstens 2 verschiedenen Trägerwellenlängen entlang der Strecke,

- mit Mitteln zur Berechnung (11) des dispersiven Einflusses auf die Messung aus den wenigstens 2 gemessenen Laufzeiten,

**dadurch gekennzeichnet, dass**

• die Mittel zur Emission (1,2,3,4) so gestaltet sind, dass sie wenigstens in Form mindestens eines zweiten Halbleiterlasers (3) eine zweite Trägerwellenlänge im violetten Wellenlängenbereich emittieren und

• die Mittel zum Empfang (7,8,9) zusammen mit dem visuellen Fernrohr eine gemeinsame Optik für die mindestens 2 Trägerwellenlängen verwenden.

2. Geodätisches Messgerät nach Anspruch 1,
   **dadurch gekennzeichnet, dass**
   Mittel zur Berechnung einer Korrektur der dispersiven Einflüsse, bspw. für eine Distanzmessung, vorhanden sind.

3. Geodätisches Messgerät nach einem der vorangehenden Ansprüche,
   **dadurch gekennzeichnet, dass**
   die zweite Trägerwellenlänge im Bereich von 390 nm bis 420 nm oder von 425 nm bis 455 nm liegt.

4. Geodätisches Messgerät nach einem der vorangehenden Ansprüche,
   **dadurch gekennzeichnet, dass**
   der erste Halbleiterlaser (2) und der zweite Halkbleiterlaser (3) eine identische oder eine gemeinsame elektronische Ansteuerung (1) besitzen.

5. Geodätisches Messgerät nach einem der vorangehenden Ansprüche,
   **dadurch gekennzeichnet, dass**
   die elektromagnetische Strahlung der zweiten Trägerwellenlänge intensitätsmoduliert wird mit Anstiegzeiten maximal im Nanosekunden-Bereich, vorzugsweise im Picosekunden-Bereich.

6. Geodätisches Messgerät nach einem der vorangehenden Ansprüche,
   **dadurch gekennzeichnet, dass**
   die gemeinsame Optik *für die* wenigstens 2 Trägerwellenlängen eine identische Bildweite aufweist.

7. Geodätisches Messgerät nach Anspruch 6,
   **dadurch gekennzeichnet, dass**
   Glassorten der gemeinsamen Optik so gewählt sind, dass der bezüglich der Wellenlänge parabolartige Verlauf der chromatischen Fokusverschiebung spektral so an die richtige Position verschoben ist, dass die Bildweiten für die beiden Trägerwellenlängen identisch sind.

8. Geodätisches Messgerät nach einem der vorangehenden Ansprüche 1 bis 6,
   **dadurch gekennzeichnet, dass**
   die Mittel zum Empfang (7,8,9) von elektromagnetischer Strahlung eine Optik mit reflektiven Elementen aufweisen.

9. Geodätisches Messgerät nach einem der vorangehenden Ansprüche,
   **dadurch gekennzeichnet, dass**
   mindestens eine Trägerwellenlänge, insbesondere die zweite Trägerwellenlänge, stabilisiert ist, beispielsweise durch

o Distributed Feedback (DFB),
o Distributed Bragg Reflector (DBR),
o Fibre-Bragg-Grating (FBG) oder
o Fabry-Perot-Etalon-Locking.

**10.** Geodätisches Messgerät nach einem der vorangehenden Ansprüche,
**dadurch gekennzeichnet, dass**
Mittel vorhanden sind zur, vorzugsweise rechnerischen, Kompensation eines Einflusses der thermischen Drift mindestens einer Trägerwellenlänge, insbesondere der zweiten Trägerwellenlänge, auf den dispersiven Effekt oder zur Vermeidung dieser Drift, vorzugsweise durch Regelung der Temperatur der Mittel zur Emission.

**11.** Geodätisches Messgerät nach einem der vorangehenden Ansprüche,
**dadurch gekennzeichnet, dass**
die Vorrichtung oder mindestens eines ihrer Mittel modular gefasst sind.

**12.** Verwendung einer Vorrichtung nach einem der vorangehenden Ansprüche zur Korrektur der aus der Dispersion resultierenden Einflüsse auf Distanzmessungen.

**Claims**

**1.** Geodetic measuring instrument, in particular a theodolite, having

- a visual telescope, and
- a device for determining the dispersive influence on a measurement, in particular a distance measurement, along a path, using the principle of phase or pulse modulation,

- having means for emitting (1, 2, 3, 4) electromagnetic radiation with at least 2 carrier wavelengths, the means for emitting (1, 2, 3, 4) being fashioned such that, at least in the form of at least one first semiconductor laser (2), they emit a first carrier wavelength in the infrared or red wavelength region,
- having means for receiving (7, 8, 9) the at least 2 carrier wavelengths,
- having means for propagation time measurement (10) of the at least 2 different carrier wavelengths along the path,

- having means for calculating (11) the dispersive influence on the measurement from the at least 2 measured propagation times,

**characterized in that**

• the means for emitting (1, 2, 3, 4) are fashioned so that, at least in the form of at least one second semiconductor laser (3), they emit a second carrier wavelength in the violet wavelength region, and
• the means for receiving (7, 8, 9) use together with the visual telescope a common optics for the at least 2 carrier wavelengths.

**2.** Geodetic measuring instrument according to Claim 1, **characterized in that** means are present for calculating a correction of the dispersive influence, for example for a distance measurement.

**3.** Geodetic measuring instrument according to one of the preceding claims, **characterized in that** the second carrier wavelength lies in the range from 390 nm to 420 nm, or from 425 nm to 455 nm.

**4.** Geodetic measuring instrument according to one of the preceding claims, **characterized in that** the first semiconductor laser (2) and the second semiconductor laser (3) have an identical or a common electronic drive (1).

**5.** Geodetic measuring instrument according to one of the preceding claims, **characterized in that** the electromagnetic radiation of the second carrier wavelength is intensity modulated with rise times of at most in the nanosecond range, preferably in the picosecond range.

**6.** Geodetic measuring instrument according to one of the preceding claims, **characterized in that** the common optics for the at least 2 carrier wavelengths have an identical image width.

7. Geodetic measuring instrument according to Claim 6, **characterized in that** glass types of the common optics are selected so that in spectral terms the characteristic of the chromatic focal shift, which is like a parabola with reference to wavelength, is shifted to the correct position so that the image widths for the two carrier wavelengths are identical.

8. Geodetic measuring instrument according to one of the preceding Claims 1 to 6, **characterized in that** the means for receiving (7, 8, 9) electromagnetic radiation have an optics with reflective elements.

9. Geodetic measuring instrument according to one of the preceding claims, **characterized in that** at least one carrier wavelength, in particular the second carrier wavelength, is stabilized, for example by

    o distributed feedback (DFB),
    o distributed Bragg reflector (DBR),
    o fibre Bragg grating (FBG) or
    o Fabry-Perot etalon locking.

10. Geodetic measuring instrument according to one of the preceding claims, **characterized in that** means are present for compensating, preferably by computation, an influence of the thermal drift of at least one carrier wavelength, in particular the second carrier wavelength, on the dispersive effect, or for avoiding this drift, preferably by controlling the temperature of the means for emission.

11. Geodetic measuring instrument according to one of the preceding claims, **characterized in that** the device or at least one of its means, is of modular design.

12. Use of an instrument according to one of the preceding claims for correcting the influence on distance measurement which results from the dispersion.

**Revendications**

1. Appareil de mesure géodésique, en particulier théodolite, avec :

    - un télescope visuel, et
    - un dispositif pour déterminer l'influence dispersive sur une mesure, en particulier une mesure de distance, le long d'une ligne selon le principe de la modulation de phase ou d'impulsion,

        - avec des moyens d'émission (1, 2, 3, 4) de rayonnement électromagnétique avec au moins 2 longueurs d'ondes porteuses, les moyens d'émission (1, 2, 3, 4) étant configurés de manière que, au moins sous forme d'au moins un premier laser à semi-conducteur (2), ils émettent une première longueur d'onde porteuse dans la plage de longueurs d'ondes infrarouge ou rouge,
        - avec des moyens de réception (7, 8, 9) des au moins 2 longueurs d'ondes porteuses,
        - avec des moyens de mesure du temps de parcours (10) des au moins 2 longueurs d'ondes porteuses différentes le long de la ligne,
        - avec des moyens de calcul (11) de l'influence dispersive sur la mesure à partir des au moins 2 temps de parcours mesurés,

    **caractérisé en ce que**

        • les moyens d'émission (1, 2, 3, 4) sont configurés de manière que, au moins sous forme d'au moins un deuxième laser à semi-conducteur (3), ils émettent une deuxième longueur d'onde porteuse dans la plage de longueurs d'ondes violette, et
        • les moyens de réception (7, 8, 9), conjointement avec le télescope visuel, utilisent une optique commune pour les au moins 2 longueurs d'ondes porteuses,

2. Appareil de mesure géodésique selon la revendication 1,
    **caractérisé en ce que**
    des moyens sont prévus, pour le calcul d'une correction des influences dispersives, par exemple pour une mesure de distance.

3. Appareil de mesure géodésique selon l'une des revendications précédentes,
   **caractérisé en ce que**
   la deuxième longueur d'onde porteuse est située dans la fourchette allant de 390 nm à 420 nm, ou de 425 nm à 455 nm.

4. Appareil de mesure géodésique selon l'une des revendications précédentes,
   **caractérisé en ce que**
   le premier laser à semi-conducteur (2) et le deuxième laser à semi-conducteur (3) comprennent une commande électronique (1) identique ou commune.

5. Appareil de mesure géodésique selon l'une des revendications précédentes,
   **caractérisé en ce que**
   le rayonnement électromagnétique de la deuxième longueur d'onde porteuse est soumise à une modulation d'intensité, avec des temps de montée au maximum dans la fourchette des nanosecondes, de préférence dans la fourchette des picosecondes.

6. Appareil de mesure géodésique selon l'une des revendications précédentes,
   **caractérisé en ce que**
   l'optique commune pour les au moins 2 longueurs d'ondes porteuses présente une distance d'image identique.

7. Appareil de mesure géodésique selon la revendication 6,
   **caractérisé en ce que**
   les sortes de verre de l'optique commune sont choisies telles que l'allure de type parabolique, par rapport à la longueur d'onde, du déplacement de foyer chromatique est spectralement déplacée à la position correcte de manière que les distances d'image soient identiques pour les deux longueurs d'ondes porteuses.

8. Appareil de mesure géodésique selon l'une des revendications 1 à 6 précédentes,
   **caractérisé en ce que**
   les moyens de réception (7, 8, 9) de rayonnement électromagnétique présentent une optique munie d'éléments réflectifs.

9. Appareil de mesure géodésique selon l'une des revendications précédentes,
   **caractérisé en ce qu'**
   au moins une longueur d'onde porteuse, en particulier la deuxième longueur d'onde porteuse, est stabilisée, par exemple par :

   o Distributed Feedback (DFB),
   o Distributed Bragg Reflector (DBR),
   o Fibre-Bragg-Grating (FBG), ou
   o Fabry-Perot-Etalon-Locking.

10. Appareil de mesure géodésique selon l'une des revendications précédentes,
    **caractérisé en ce que**
    des moyens sont prévus pour compenser, de préférence par calcul, une influence de la dérive thermique au moins d'une longueur d'onde porteuse, en particulier de la deuxième longueur d'onde porteuse, sur l'effet dispersif, ou pour éviter cette dérive, de préférence par régulation de la température des moyens d'émission.

11. Appareil de mesure géodésique selon l'une des revendications précédentes,
    **caractérisé en ce que**
    le dispositif, ou au moins l'un de ses moyens, est de conception modulaire.

12. Utilisation d'un dispositif selon l'une des revendications précédentes, pour la correction des influences, résultant de la dispersion, sur des mesures de distances.

$n$

$\Delta n$

0.4

$\lambda_2$

$\lambda_1$

0.9

$\lambda$
[$\mu m$]

$\Delta \lambda$

$\mathcal{F}ig.$ 1

$n$

A

$\Delta n$

0.4

$\lambda_2$

$\lambda_1$

0.9

$\lambda$
[$\mu m$]

$\Delta \lambda$

$\mathcal{F}ig.$ 2

Fig. 3

Fig. 4

Fig. 5

Fig. 6

**EP 1 251 331 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5233176 A
- US 5306662 A
- US 5578839 A
- US 5747832 A
- US 5767581 A
- EP 0701702 A
- EP 0738899 A